Europäisches Patentamt

European Patent Office

Office européen des brevets

(11) Publication number: **0 066 982**
**B1**

(12) **EUROPEAN PATENT SPECIFICATION**

(45) Date of publication of patent specification: **21.10.87**

(21) Application number: **82302527.5**

(22) Date of filing: **18.05.82**

(51) Int. Cl.⁴: **B 29 C 71/02**

(54) **Method of strengthening the neck portion of a bottle-shaped container of biaxially-oriented polyethylene terephthalate resin.**

(30) Priority: **19.05.81 JP 75584/81**

(43) Date of publication of application:
**15.12.82 Bulletin 82/50**

(45) Publication of the grant of the patent:
**21.10.87 Bulletin 87/43**

(84) Designated Contracting States:
**CH DE FR GB IT LI NL**

(56) References cited:
**DE-A-2 540 930**
**DE-A-2 911 149**
**FR-A-2 140 736**
**FR-A-2 348 802**
**US-A-3 695 805**

(73) Proprietor: **Yoshino Kogyosho CO., LTD.**
**No 3-2-6, Ojima 3-chome, Koto-ku**
**Tokyo 136 (JP)**

(72) Inventor: **Takada, Takuzo**
**No. 3-2-6, Ojima Koto-ku**
**Tokyo (JP)**
Inventor: **Iizuka, Takao**
**No. 310, Minoridai Matsudo-shi**
**Chiba-ken (JP)**

(74) Representative: **Heath, Derek James et al**
**Bromhead & Co. 30 Cursitor Street Chancery**
**Lane**
**London EC4A 1LT (GB)**

Courier Press, Leamington Spa, England.

# Description

The present invention relates to a method of strengthening the neck portion of a hollow blow-moulded bottle-shaped container of a biaxially-oriented polyethylene terephthalate resin according to the preamble of claim 1.

Hollow blow-moulded bottle-shaped containers of a biaxially-oriented polyethylene terephthalate resin, abbreviated hereinafter as "a PET", have, because of their excellent physical properties and durability, a wide range of applications, but these excellent properties can be attained effectively only after the resin material has been biaxially oriented. It has also been found that the durability of the neck portions of bottle-shaped containers which have been blow-moulded without being properly oriented at the time of moulding have been found to deteriorate as compared with the body portions of the containers which have been sufficiently oriented at that time.

A further drawback of these blow-moulded bottle-shaped containers is that, when a highly concentrated alcohol is in contact with the neck portion of the container, the alcohol impregnates into the wall of the neck portion, resulting in a white opacification of the neck portion due to "crazing".

A somewhat similar problem is outlined in DE—A—2 540 930 where the strength of containers moulded from thermoplastics materials such as PET has been found to decrease where the containers are used to store beer, soft drinks containing $CO_2$, milk and other preserved foods (which need to be heated) and medical products which may need to be autoclaved. The Specification of DE—A—2 540 930 accordingly proposes that the material of the containers be strengthened by, *inter alia*, heating the container to a temperature exceeding 140°C during manufacture of the latter.

The use by us of such a heat treatment to strengthen the neck portions only of bottle-shaped containers made of PET has been found to improve the mechanical rigidity, impact resistance, wear resistance and external pressure resistance of the neck portions. However, the thus-strengthened neck portions tend to shrink under the heat of the heat treatment and are sometimes disadvantageously deformed due to such thermal shrinkage. This is due, in part, to the neck portions not always having a uniform thickness at the peripheral wall because of the provision of a spiral screw-thread or of a collar on their outer peripheral surface. This means that the neck portion is not always heated uniformly over its entire volume and is not always uniformly cooled as a whole. The shrinkage deformation of the neck portion does not therefore always occur uniformly but sometimes causes a loss of circularity at the neck portion of the bottle-shaped container or the loss of "flatness" at the upper end face of the neck portion.

Accordingly, an aim of the present invention is to provide a method of strengthening the neck portion of a hollow blow-moulded bottle-shaped container of a biaxially-oriented polyethylene terephthalate resin in which the above-mentioned drawbacks and disadvantages of conventional bottle-shaped containers can be eliminated or reduced and which can prevent the occurrence of the improper shrinkage deformation of the neck portion due to the thermal influence applied externally when the neck portion is heat-treated to be strengthened by the white opacification of the container.

With this aim in view, the invention is directed to a method of strengthening the neck portion of a hollow blow-moulded bottle-shaped container of a biaxially-oriented polyethylene terephthalate resin which comprises heating the neck portion of the container to a temperature in the range of 140 degrees to 170 degrees and cooling the neck portion so as to opacify and thus whiten it, and is characterised in that, prior to the cooling step, a cylindrical die pin having an outer diameter smaller than the bore of the unheated neck portion but greater than the bore of the neck portion had it been heated and cooled without the die pin being present is inserted into the opening of the neck portion so that the neck portion is shrunk onto the outer periphery of the die pin during the cooling step which is accomplished by blowing cooling air or gas from outside onto the neck portion, after which the die pin is removed from the neck portion.

It is already known from DE—A—2 911 149 to use a die pin in the production of bottle-shaped containers, but in that case the die pin serves to prevent inward deformation of the neck of the container and does not have the neck portion shrunk onto it as in the present invention.

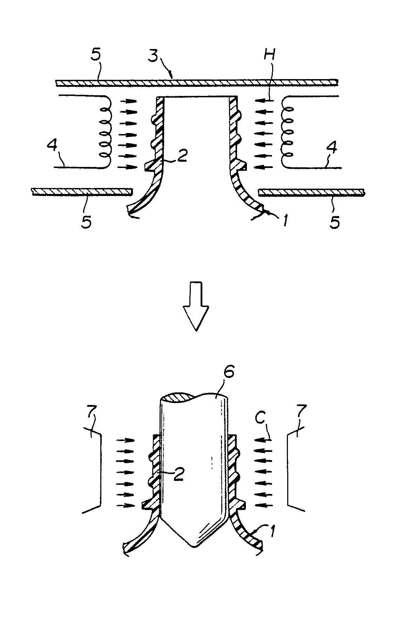

An example of the method of the invention is illustrated in the accompanying drawing which shows a schematic flowchart of the steps of strengthening the neck portion of a bottle-shaped container according to the present invention.

The illustrated method of strengthening the neck portion of a bottle-shaped container of a biaxially-oriented PET comprises the steps of heating the neck portion 2 of the blow-moulded bottle-shaped container 1 of biaxially-oriented PET to a temperature in the range 140° to 170°C at H, inserting a cylindrical die pin 6 of an outer diameter slightly smaller than the bore of the opening of the neck portion 2 into the opening of the neck portion 2 thus heated, shrinking the neck portion 2 by blowing chilled gas or air on to the neck portion 2 from outside to bring this neck portion into contact with the outer periphery of the die pin 6, and gradually cooling the neck portion 2 at C to opacify the neck portion 2 in white, thereby increasing the density of the resin material of the neck portion 2 to strengthen the neck portion.

The means for heating the neck portion 2 may vary in practice, and, in the illustrated embodiment, comprises a heating furnace 3 which contains an electrical heater 4 shielded by a frame wall 5 in such a manner that only the neck portion

2 of the bottle-shaped container 1 can be inserted into the furnace 3. The bottle-shaped container 1 is rotated at a predetermined constant speed around its own longitudinal axis while the neck portion 2 is disposed within the furnace 3 so that the entire neck portion 2 is heated uniformly to a temperature ranging from 140° to 170°C.

The precise temperature to which the neck portion 2 is heated may be determined with respect to the temperature for whitening the PET material of the neck portion of the bottle-shaped container, the said temperature being predetermined in advance on the basis of the thickness and of the neck portion 2 of the bottle-shaped container 1. The neck portion 2 is heated to an accurate temperature by controlling the rotational speed of the bottle-shaped container 1 and the electrical power supplied to the heater 4.

Once the neck portion 2 has been heated to the predetermined temperature in the furnace 3, it is then gradually cooled, with the die pin 6 inserted into the opening of the neck portion 2, by blowing chilled or cooled air over it by means of a blower 7. The result is that the resin material of the neck portion 2 is thus whitened and is accordingly strengthened in such a manner that the neck portion 2 is cooled by the die pin 6 and the chilled air during a brief period of time, for example, 20 to 25 sec. It is, however, to be understood that the rate of cooling can be widely varied, according to choice.

The die pin 6 is of cylindrical shape and has a slightly smaller outer diameter than that of the bore in the neck portion 2. If desired, means for supplying or circulating cooling fluid can be provided in the die pin itself. As the neck portion 2 of the bottle-shaped container shrinks slightly by reason of the heat treatment, the outer diameter of the die pin 6 is set to a value whereby it fits snugly in the opening of the neck portion 2 when the latter is heat treated. It therefore follows that the outer diameter of the die pin 6 is slightly larger than the bore in the neck portion 2 had the latter been heat-treated without the die pin 6 and then cooled.

Inasmuch as the outer diameter of the die pin 6 to be inserted into the neck portion 2 of the bottle-shaped container 1 is thus set to a value slightly larger than the bore in the neck portion 2 had the latter been shrunk by the cooling and solidifying of the neck portion without the die pin 6, the neck portion 2 is formed to its final shape by shrinking on to the die pin 6. Since the die pin 6 has a cylindrical shape in this case, the neck portion 2 is likewise formed in a cylindrical shape having a regularly circular section in accordance with the shape of the die pin 6.

The upper end face of the neck portion 2 is held in a flat surface, with the result that the neck portion 2 is thermally shrunk in the shape desired at the time of injection moulding, thereby eliminating improper strain or deformation due to the thermal shrinkage.

In order to remove the die pin 6 from the opening of the neck portion 2 after the neck portion 2 has thermally shrunk thereon, i.e., to remove the die pin from the neck portion 2 smoothly, the die pin 6 is so formed as to be slightly reduced in outer diameter towards its conical end.

It will therefore be seen that the neck portion 2 has its physical and mechanical properties enhanced because, prior to the cooling step, a cylindrical die pin 6 having an outer diameter smaller than the bore of the unheated neck portion 2 but greater than the bore of the neck portion 2 had it been heated and cooled without the die pin 6 being present is inserted into the opening of the neck portion so that the neck portion is shrunk onto the outer periphery of the die pin 6 during the cooling step which is accomplished by blowing cooling air or gas from outside onto the neck portion, after which the die pin 6 is removed from the neck portion 2.

**Claims**

1. A method of strengthening the neck portion (2) of a hollow blow-moulded bottle-shaped container (1) of a biaxially-oriented polyethylene terephthalate resin, which method comprises heating the neck portion (2) of the container (1) to a temperature in the range of 140° to 170° and cooling the neck portion so as to opacify and thus whiten it, characterised in that, prior to the cooling step, a cylindrical die pin (6) having an outer diameter smaller than the bore of the unheated neck portion (2) but greater than the bore of the neck portion (2) had it been heated and cooled without the die pin (6) being present is inserted into the opening of the neck portion so that the neck portion is shrunk onto the outer periphery of the die pin (6) during the cooling step which is accomplished by blowing cooling air or gas from outside onto the neck portion, after which the die pin (6) is removed from the neck portion (2).

2. A method according to claim 1, characterised in that the heating step is performed by heating means comprising a heating furnace (3) containing a heater (4), there being a shield (5) which ensures that only the neck portion (2) of the bottle-shaped container (1) is inserted into the furnace.

3. A method according to claim 1 or claim 2, characterised in that the blowing and cooling is performed over a period of time lasting 10 to 25 seconds by a blower (7) disposed around the neck portion (2) of the container (1) in the heating furnace (3) and by the die pin.

4. A method according to any one of claims 1—3, characterised in that die pin (6) has an outer diameter of cylindrical shape which leads into a conical end of the die pin.

**Patentansprüche**

1. Verfahren zur Verfestigung des Halsabschnitts (2) eines hohlen, durch Blasformen hergestellten, flaschenförmigen Behälters (1) aus einem biaxial orientierten Polyethylenterephthalatharz, bei welches der Halsabschnitt (2) des Behälters (1) auf eine Temperatur im Bereich von 140° bis 170° erhitzt und der Halsabschnitt abgekühlt wird, um ihn undurchsichtig zu machen und somit zu bleichen, dadurch gekennzeichnet, daß vor dem Kühlschritt ein zylindrischer Formstift (6) mit einem Außendurchmesser, der kleiner als die lichte Weite des nichterhitzten Halsabschnitts (2), aber größer als die lichte Weite des Halsabschnitts (2) ist, die vorliegen würde, wäre dieser erhitzt und ohne vorliegenden Formstift (6) abgekühlt worden, in die Öffnung des Halsabschnittes derart eingeführt wird, daß der Halsabschnitt auf den Außenumfang des Formstifts (6) während des Kühlschritts aufgeschrumpft wird, was durch Aufblasen von Kühlluft oder Gas von außen auf den Halsabschnitt erreicht wird, worauf der Formstift (6) vom Halsabschnitt (2) entnommen wird.

2. Verfahren nach Anspruch 1, dadurch gekennzeichnet, daß der Heizschritt mit einer Heizvorrichtung durchgeführt wird, die einen Heizofen (3) mit einem Heizelement (4) umfaßt, wobei eine Abschirmung (5) vorhanden ist, die sicherstellt, daß nur der Halsabschnitt (2) des flaschenförmigen Behälters (1) in den Heizofen eingeführt wird.

3. Verfahren nach Anspruch 1 oder 2, dadurch gekennzeichnet, daß das Anblasen und Kühlen während einer Zeitspanne von 10 bis 25 Sekunden mittels eines Gebläses (7) erfolgt, das den Halsabschnitt (2) des Behälters im Heizofen (3) umgibt und mittels des Formstifts.

4. Verfahren nach einem der Ansprüche 1 bis 3, dadurch gekennzeichnet, daß der Formstift (6) einen Außendurchmesser einer Zylinderform aufweist, die in ein konisches Ende des Formstifts übergeht.

**Revendications**

1. Procédé pour renforcer la partie de col (2) d'un récipient creux (1) en forme de bouteille, moulé par soufflage, en résine du type téréphtalate de polyéthylène orientée biaxialement, lequel procédé consiste à chauffer la partie de col (2) du récipient (1) à une température de l'ordre de 140 à 170° et à refroidir la partie de col afin de l'opacifier et donc la blanchir, caractérisé en ce que, avant l'étape de refroidissement, une broche cylindrique (6) de moulage ayant un diamètre extérieur plus petit que l'alésage de la partie de col non chauffée (2), mais plus grand que l'alésage qu'aurait la partie de col (2) si elle avait été chauffée et refroidie en l'absence de la broche (6) de moulage, est insérée dans l'ouverture de la partie de col afin que la partie de col soit rétractée sur la periphérie extérieure de la broche (6) de moulage pendant l'étape de refroidissement qui est exécutée par soufflage d'air ou d'un gaz de refroidissement de l'extérieur sur la partie de col, après quoi la broche (6) de moulage est retirée de la partie de col (2).

2. Procédé selon la revendication 1, caractérisé en ce que l'étape de chauffage est exécutée par des moyens de chauffage comprenant un four (3) de chauffage contenant un élément chauffant (4), un écran (5) assurant que seule la partie de col (2) du récipient (1) en forme de bouteille est introduite dans le four.

3. Procédé selon la revendication 1 ou la revendication 2, caractérisé en ce que le soufflage et le refroidissement sont exécutés sur une période de temps durant 10 à 25 secondes par une soufflante (7) disposée autour de la partie de col (2) du récipient (1) dans le four (3) de chauffage et par la broche de moulage.

4. Procédé selon l'une quelconque des revendications 1—3, caractérisé en ce que la broche (6) de moulage présente un diamètre extérieur de forme cylindrique qui aboutit à une extrémité conique de la broche de moulage.